(19) Europäisches Patentamt
European Patent Office
Office européen des brevets

(11) Veröffentlichungsnummer: **0 212 302**
**A2**

(12) **EUROPÄISCHE PATENTANMELDUNG**

(21) Anmeldenummer: **86110102.0**

(22) Anmeldetag: **23.07.86**

(51) Int. Cl.⁴: **D 06 P 3/54**, C 09 B 67/40
// C09B67/46

(30) Priorität: **07.08.85 DE 3528261**

(43) Veröffentlichungstag der Anmeldung: **04.03.87 Patentblatt 87/10**

(84) Benannte Vertragsstaaten: **AT BE CH DE FR IT LI**

(71) Anmelder: **HOECHST AKTIENGESELLSCHAFT, Postfach 80 03 20, D-6230 Frankfurt am Main 80 (DE)**

(72) Erfinder: **Von der Eltz, Hans-Ulrich, Dr., Willibrachtstrasse 14, D-6000 Frankfurt am Main 50 (DE)**
Erfinder: **Schön, Franz, Eisenacher Weg 4, D-6230 Frankfurt am Main 80 (DE)**
Erfinder: **Hofmann, Klaus, Meerholzer Strasse 50, D-6000 Frankfurt am Main 61 (DE)**
Erfinder: **Tappe, Horst, Dr., Ringstrasse 9, D-6057 Dietzenbach (DE)**

(54) **Verfahren zum Thermosolfärben von Polyesterfasermaterial unter Verwendung flüssiger Dispersionsfarbstoffpräparationen.**

(57) Thermosolfärbungen auf reinen Polyesterfasern und auf Polyesterfaser-Mischungen müssen bei Verwendung der üblich gefinishten Dispersionsfarbstoffe naß nachbehandelt werden, um diverse Echtheitsschwächen zu beheben. Erfindungsgemäß wurde nun gefunden, daß man diese kostenintensive Naßnachbehandlung, die einen weiteren Trocknungsvorgang erfordert, einsparen kann, wenn zum Thermosolfärben von polyesterfaserhaltigen Textilien flüssige, stellmittelarme, nur organische Stellmittel enthaltende Dispersionsfarbstoffpräparate eingesetzt werden.

EP 0 212 302 A2

Verfahren zum Thermosolfärben von Polyesterfasermaterial unter Verwendung flüssiger Dispersionsfarbstoffpräparationen

Die vorliegende Erfindung betrifft das kontinuierliche Färben von Textilmaterial aus Polyester(PES)-Fasern oder der PES-Faserkomponente von entsprechenden Mischungen mit Cellulosefasern nach der Klotz-Thermosol-Technik mit wasserhaltigen Präparationen von feinverteilten Dispersionsfarbstoffen.

Flüssige Zubereitungen von in Wasser unlöslichen bis schwer löslichen Farbstoffen sind für das Färben bzw. Bedrucken von hydrophoben synthetischen Fasern wohl bekannt und im Handel erhältlich.

Flüssigeinstellungen dieses Typs werden in der Weise hergestellt, daß man den Farbstoff, z.B. einen Dispersionsfarbstoff, zusammen mit Dispergiermitteln, fernerhin noch Frostschutz- und Feuchthaltemitteln sowie weiteren Zusatzstoffen wie Antischaummittel, Antimicrobica und Fungiziden, vermischt und mechanisch, z.B. durch Vermahlen, zerkleinert. Im Zuge dieser Aufbereitung unter der Mitwirkung von Dispergiermitteln, auch als "Finish" bezeichnet, wird der Farbstoff in seine färbefertige Form übergeführt, um beim eigentlichen Färbeprozeß gute Feinverteilung in der Flotte, Stabilität der Dispersion und zufriedenstellende Farbausbeute zu garantieren.

Als Dispergiermittel für die Erzeugung solcher Präparationen werden anionenaktive oder nichtionogene, grenzflächenaktive Verbindungen verwendet, die auch gemeinsam eingesetzt werden können:
Sofern derartige Farbstoffpräparate anionisch gefinisht sind, kommen dafür die beim konventionellen Färbeprozeß mit Dispersionsfarbstoffen aus wäßrigem Medium sonst üblichen

anionischen Dispergiermittel in Betracht. Bevorzugt geeignet sind in dieser Hinsicht die Alkalimetall- oder Ammoniumsalze der Ligninsulfonsäuren, welche nach dem Sulfit- oder Kraft-Verfahren gewonnen werden; Kondensationsprodukte aus aromatischen Sulfonsäuren und Formaldehyd, insbesondere Kondensationsprodukte aus gegebenenfalls substituiertem Phenol mit Formaldehyd und Natriumbisulfit; Alkalimetallsalze von Kondensationsprodukten aus gegebenenfalls substituiertem Phenol, Naphthalin- bzw. Naphtholsulfonsäuren mit Formaldehyd und Natriumbisulfit; Alkalimetallsalze von Kondensationsprodukten aus gegebenenfalls substituierten Phenolsulfonsäuren, Formaldehyd und Harnstoff; langkettige Alkyl- oder Arylsulfonate, sowie Alkyl-aryl-polyglykolethersulfate.

Bevorzugte nichtionische Dispergiermittel oder Emulgatoren für die Flüssigeinstellungen von unlöslichen Farbstoffen sind z.B. Umsetzungsprodukte von Alkylenoxiden, wie z.B. Ethylen- oder Propylenoxid, mit alkylierbaren Verbindungen, wie z.B. Fettalkoholaten, Fettaminen, Fettsäuren, gegebenenfalls mehrkernigen Phenolen, Alkylphenolen, Arylalkylphenolen und deren Säureester, sowie Carbonsäureamiden, insbesondere Anlagerungsprodukte von 5 bis 10 Ethylenoxideinheiten an $C_8$- bis $C_{10}$-Alkylphenole sowie veresterte Oxalkylate, wie sie aus den europäischen Patentschriften EP-B1-0 028 342 und EP-B1-0 041 688 bekannt sind.

Als Feuchthaltemittel und Frostschutzmittel in den Farbstoff-Formulierungen werden bevorzugt Di- oder Polyalkohole wie Ethylenglykol, Propylenglykol, Glycerin oder Sorbit verwendet.

Üblicherweise enthalten diese bekannten Präparationen noch Elektrolyte auf Basis löslicher anorganischer Salze, wie z.B. Glaubersalz, als Stellmittel zum Einstellen eines bestimmten Farbstoffgehaltes, der in der Regel um 20 Gew.-% liegt.

Die Herstellung der zuvor erwähnten Präparationen kann nach den bekannten Verfahren erfolgen. Der Dispersionsfarbstoff oder bei Mischungen die Dispersionsfarbstoffe werden zusammen mit den geeigneten Dispergiermitteln bzw. Dispergiermittelgemischen (wobei es zweckmäßig ist, anionische und nichtionische Dispergiermittel bzw. Dispergiermittelgemische im Verhältnis 9:1 bis 1:9 gemeinsam einzusetzen), sowie den weiteren Zusätzen in Wasser angeschlämmt und einer mechanischen Zerkleinerung unterworfen. Diese mechanische Zerkleinerung erfolgt bevorzugt in Knetern, Kugelmühlen, Dispergatoren, Perlmühlen, Sandmühlen oder Attritoren.

Das Erreichen eines ausreichenden Feinverteilungszustandes des Dispersionsfarbstoffes von im allgemeinen 90 % der Farbstoffteilchen entsprechend einer Korngröße von kleiner als 5 µm, vorzugsweise von 50 % oder mehr der Teilchen kleiner als 1 µm, kann durch einen Filtertest, dem Mikroskop oder durch Sedimentationsanalyse nachgeprüft werden.

Die so erhaltenen Präparationen enthalten den Farbstoff in stabiler, feinverteilter Form und sind bei hoher Farbstoffkonzentration dispergiermittelarm und gießbar.

Es ist ebenso nicht mehr neu, Farbstoffpräparate dieser Herkunft sowie Beschaffenheit zum Färben von Polyesterfasern und des Polyesterfaseranteils von entsprechenden Mischungen mit anderen Fasern einzusetzen. Bevorzugt werden flüssige Dispersionsfarbstoffpräparate zum kontinuierlichen Färben derartiger Textilien nach dem Thermosol-Verfahren eingesetzt. Dazu wird der in einer wasserhaltigen Klotzflotte dispergierte Farbstoff auf die textile Warenbahn geklotzt und nach dem Zwischentrocknen auf dem Fasermaterial thermosoliert. Anschließend erfolgt eine Nachbehandlung des so gefärbten Textilgutes, die dazu dient, nicht fixierte Farbstoffanteile und die im Verein mit den Klotzflotten

ebenfalls aufgebrachten Hilfsmittel sowie die in der Farbstoffpräparation enthaltenen Stell- und Dispergiermittel zu entfernen.

Ein solcher nachträglicher Arbeitsgang macht es notwendig, die nach dem Thermosolieren bereits trockenen Gewebe erneut einer Naßbehandlung zu unterziehen und anschließend das wiederum feuchte Färbegut zur Fertigstellung noch einmal zu trocknen.

Vorzugsweise wird dieses bekannte Verfahren für die Erzeugung von Färbungen mit Dispersionsfarbstoffen auf Mischungen von Polyesterfasern mit Cellulosefasern durchgeführt. Für das entsprechende Färben von Geweben aus 100 % Polyesterfasern hat es hingegen bisher kaum Bedeutung erlangt, weil bei der allemal notwendigen Zwischentrocknung vor dem Thermosolieren Migrationsprobleme im Falle der aufgebrachten Farbstoffe die Regel sind. Jedoch ist es in letzter Zeit gelungen, auch diese negative Begleiterscheinung zu meistern.

Dessenungeachtet ist bei dem gängigen Verfahren als fortdauernd lästig der Umstand empfunden und diesbezüglich als negativer Faktor gewertet worden, daß durch eine kostenintensive Nachbehandlung die auf der Ware verbliebenen Hilfsmittel - und hier in der Hauptsache die im Farbstoffpräparat enthaltenen Dispergier- und Stellmittel - nach wie vor entfernt werden mußten, da diese zu Echtheitsproblemen in Sachen der erzeugten Färbungen führten.

Anders als bei Ausziehfärbungen, wo es in erster Linie gilt, nicht fixierte Farbstoffanteile durch die Nachbehandlung zu entfernen, sind es beim Färben nach dem Thermosol-Verfahren wiederum die Hilfsmittel, welche Schwierigkeiten bereiten, sowie Farbstoffanteile, die eventuell vorhandene Begleitfasern anschmutzen.

Ohne eine derartige Nachbehandlung der Färbungen treten aber, insbesondere beim Konfektionieren, auf dem Warenbild folgende störende Effekte auf: Vor allem auf glatten Textilien, wie z.B. Futterstoffen, werden Fingerabdrücke aufgrund von dadurch übertragener Körperfeuchte sichtbar, und es bilden sich, sofern Wassertropfen auf solchermaßen gefärbte Textilien gelangen, dort in Übereinstimmung mit dem Umriß der Feuchtigkeitsauftragsstelle dunkle Ränder. Das gleiche nachteilige Resultat stellt sich beim örtlichen Aufdämpfen der Ware während der Konfektionierung ein, d.h. es ist eine allgemeine Feuchteempfindlichkeit nicht nachbehandelter Gewebe gegeben, die aus einem herkömmlichen Thermosolfärbeprozeß von PES-Fasern mit Dispersionsfarbstoffen stammen.

Aufgabe der vorliegenden Erfindung ist es nunmehr gewesen, die Ursachen der oben erörterten Echtheitsschwächen aufzufinden und diese Erscheinungen zu beseitigen, so daß durch Thermosolieren von Dispersionsfarbstoffen kontinuierlich gefärbte Textilien aus vorwiegend Polyesterfasern ohne Nachbehandlung konfektioniert werden können.

Diese Aufgabe wird erfindungsgemäß somit dadurch gelöst, daß man für das den Gegenstand des Schutzrechtes darstellende Färbeverfahren zum Klotzen des Textilgutes an dem jeweiligen Farbmittel oder Mischungen davon hochkonzentrierte Flüssigeinstellungen aus nur organische Stellmittel enthaltenden, ausschließlich oder überwiegend mit nichtionischen Dispergiermitteln gefinishten Dispersionsfarbstoffen einsetzt, und daß die im Anschluß an die Thermosolierung der unter solchen Bedingungen erzeugten Klotzung zur Farbstoff-Fixierung sonst übliche Nachbehandlung der bereits einen Trocknungsvorgang durchgelaufenen Färbung wiederum in nassem Zustand zur Unterdrückung der die Handhabung bzw. Lagerung der fertiggestellten Ware beeinträchtigenden Feuchteempfindlichkeit unterbleibt.

Im Zuge der konventionellen Maßnahmen zur Erzeugung von PES-Färbungen hat es sich als ein überraschender Fortschritt sowie zugleich als ein in Bezug auf die Verfahrensabwicklung sich ergebender außerordentlicher Gewinn erwiesen, daß man im Falle der Verwendung von flüssigen stellmittelarmen, nur mit organischen Stellmitteln bereiteten Flüssigpräparationen von Dispersionsfarbstoffen auf eine nasse Nachbehandlung der gefärbten Textilien nach dem Thermosolieren verzichten kann, ohne die eingangs geschilderten Nachteile in Kauf nehmen zu müssen. So gefärbte Artikel sind problemlos direkt weiterverarbeitbar.

Erstaunlicherweise werden darüber hinaus - selbst für den einschlägigen Fachmann nicht voraussehbar gewesen - bei Gebrauch derartiger Farbstoffpräparate zum Färben entsprechend der Thermosol-Methode auch die Begleitfasern in der Mischung mit Polyesterfasern deutlich weniger angetönt, als dies anderweitig mit üblichen Farbstoffzubereitungen geschieht, was zur Erhöhung der Echtheitseigenschaften auf Seiten der erfindungsgemäß erzielten Färbungen mit beiträgt.

Als Beispiele für nichtionogene Typen von Dispergiermitteln zur Herstellung der nach der vorliegenden Erfindung zur Anwendung gelangenden besonderen Flüssigpräparationen von Dispersionsfarbstoffen kommen in Betracht:
Vernetzte bzw. nicht-vernetzte Blockpolymerisate aus Propylenoxid und Ethylenoxid;
Anlagerungsprodukte von Ethylenoxid und/oder Propylenoxid an mehrkernige Novolakharze entsprechend der europäischen Patentschrift EP-B1-0 013 576;
Mit Carbonsäuren partiell oder vollständig veresterte Anlagerungsprodukte von Ethylenoxid und/oder Propylenoxid an mehrwertige Alkohole entsprechend der europäischen Patentschrift EP-B1-0 028 342;
Mit Carbonsäuren partiell oder vollständig veresterte Oxalkylate aromatischer Hydroxyverbindungen entsprechend

der europäischen Patentschrift EP-B1-0 041 688; und besonders
Anlagerungsprodukte von Ethylenoxid an durch Kondensation von 2- bzw. 4-Hydroxydiphenyl mit Benzylchlorid synthetisiertes Benzyl-biphenylol, gegebenenfalls im Gemisch mit dem durch weitere Umsetzung des Kondensationsproduktes mit Halogencarbonsäuren erhältlichen Carboxyalkyl-ether, entsprechend der europäischen Patentanmeldung EP-A2-0 057 439.

Sofern die erfindungsgemäß eingesetzten Präparationen zusätzlich noch anionische Dispergiermittel enthalten, werden hierfür bevorzugt Kondensationsprodukte aus aromatischen Sulfonsäuren und Formaldehyd eingesetzt, insbesondere Kondensationsprodukte aus Alkylnaphthalinsulfonsäuren, vor allem Methylnaphthalinsulfonsäuren und Formaldehyd, wie sie aus der deutschen Patentschrift DE-C2-24 42 514 bekannt sind. Geeignet sind auch Kondensationsprodukte aus gegebenenfalls substituiertem Phenol mit Formaldehyd und Natriumsulfit sowie Alkalisalze von Ligninsulfonsäuren.

Als organische Stellmittel, welche für das Eintreffen der vorteilhaften Effekte beim erfindungsgemäßen Einsatz der Farbstoffpräparationen verantwortlich sind, sollen flüssige Substanzen mit Lösungsmittelcharakter, beispielsweise mehrwertige Alkohole, insbesondere Glykol oder Glycerin, sowie deren niedere Ether verstanden werden.

Die Mitverwendung der zuletzt genannten Substanzen in bekannten Farbstoffzubereitungen wird wohl in dem vorstehend anhand von Referenzstellen zitierten Stand der Technik bereits erwähnt, jedoch ergeben die daraus ersichtlichen Eigenschaften dieser Typen von Hydroxyverbindungen, welche dort als Wasserrückhaltemittel (EP-B1-0 013 576; EP-B1-0 028 342 und EP-B1-0 041 688) oder als Frostschutz (EP-A2-0 057 439) eine Rolle spielen, keinen Anhaltspunkt dafür, daß die Anwesenheit derartiger organischer Stellmittel in den Flüssigpräparationen, welche nach dem beanspruchten Verfahren zur Anwendung gelangen, sich positiv auf die Reduzierung der Feuchtempfindlichkeit von auf solchem Wege erzeugten Thermosol-Färbungen auswirkt.

Gleiches gilt auch für die gezeigten und beurteilten Eigenschaften des in den Präparationen die Grundlage für den besonderen Farbstoff-Finish darstellenden nichtionischen Dispergiermittels selbst, welches gemäß den Angaben des erwähnten Standes der Technik dazu ausersehen ist, als Hilfsmittel eine Beschleunigung des Mahlprozesses bei der Herstellung solcher Zubereitungen zu bewerkstelligen und auch eine Erhöhung der einzuarbeitenden Farbstoffgehalte zu gestatten. Außerdem soll durch den Einsatz der bekannten nichtionisch gefinishten Farbstoffpräparationen die HT-Stabilität von damit angesetzten Färbeflotten sowie deren Verträglichkeit gegenüber Carriern beim Kochtemperaturfärben verbessert werden. Kein Wort wird indessen über eine gegebenenfalls beabsichtigte gezielte Beeinflussung der Feuchteempfindlichkeit von nach dem Thermosolprozeß erstellten PES-Färbungen aufgrund der Wirksamkeit nichtionisch gefinishter Dispersionsfarbstoffe verloren. Die Tatsache, daß man im Rahmen der Anwendung solcher Zubereitungen im Textildruck die erforderliche Nachwäsche verkürzen bzw. in gewissen Fällen sogar ganz davon absehen kann, ohne daß es dabei zu einer merklichen Griffverschlechterung der bedruckten Ware kommt, ist eindeutig auf das Vorhandensein der dort benötigten Verdickung zurückzuführen, woraus sich keine technische Lehre im Hinblick auf die vorliegende Erfindung ziehen läßt.

Die Herstellung der erfindungsgemäß verwendeten Präparationen kann nach allen bekannten Verfahren erfolgen. Von besonderem Interesse für die Belange der Praxis ist der Umstand, daß es sich hierbei um hochkonzentrierte Flüssigeinstellungen handelt, welche im wesentlichen frei von

Elektrolyt und möglichst dispergiermittelarm sowie stellmittelarm sind.

Die Erfindung wird im folgenden an Hand von Herstellungsvorschriften für die zum Einsatz gelangenden Flüssigpräparationen von Dispersionsfarbstoffen sowie Ausführungsbeispielen für das Färbeverfahren näher erläutert. Die darin aufgeführten Prozentangaben sind - soweit nicht ausdrücklich anders vermerkt - Gewichtsprozente und sind im Falle der Angaben für die Flottenaufnahme auf das Gewicht der trockenen Ware bezogen.

## Herstellung der Farbstoffpräparationen

Vorschrift 1:

560 Teile einer wäßrigen Paste des gelben Dispersionsfarbstoffes der Formel

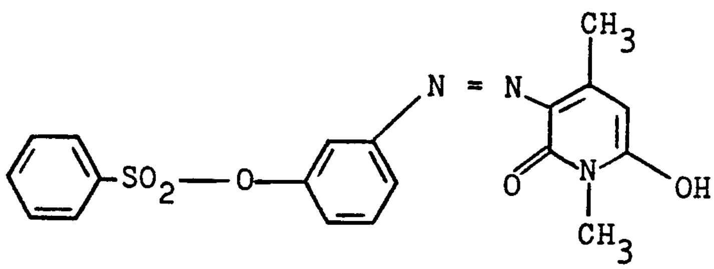

(entsprechend 380 Teilen Reinfarbstoff), 100 Teile Monoethylenglykol, 100 Teile Glycerin, 64 Teile des Umsetzungsproduktes aus 4-Benzyl-2-hydroxydiphenyl mit 12 Molen Ethylenoxid, 7 Teile des Umsetzungsproduktes aus 4-Benzyl-2-hydroxydiphenyl mit 12 Molen Ethylenoxid und Monochloressigsäure, 1 Teil o-Phenylphenol-Natrium und 168 Teile Wasser werden in einem Gefäß mit der Dissolverscheibe angeschlagen und im Autoklaven zwei Stunden bei 120°C gerührt, wobei sich die färbestabile γ-Modifikation bildet. Anschließend wird der Anschlag in einer Perlmühle mit Ottawa-Sand der durchschnittlichen Körnung von 0,7 bis 1 mm gemahlen. Nach einer Mahlzeit von drei Stunden erhält man eine Dispersion, deren Farbstoffteilchen zu 70 % eine Korngröße von kleiner als 1 µm aufweisen. Nach dem Abtrennen des Mahlsandes und anschließender Siebung durch ein 90 oder 120 DIN-Sieb erhält man einen gut fließfähigen Teig mit einem Farbstoffgehalt von 38 %. Diese Farbstoffzubereitung ist bei Raumtemperatur und bei 50°C mehrere Monate lang lagerstabil.

Vorschrift 2:

638,3 Teile einer wäßrigen Paste des roten Dispersionsfarbstoffes der Formel

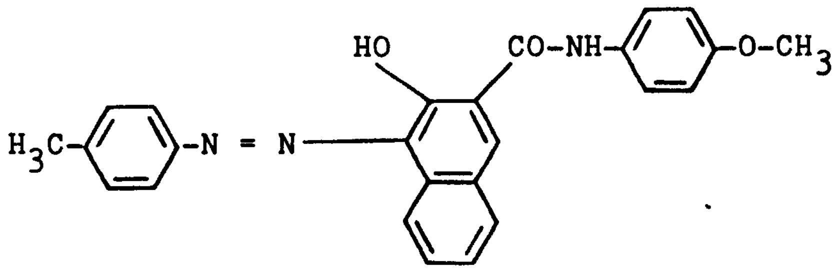

(entsprechend 300 Teilen Reinfarbstoff), 200 Teile Monoethylenglykol, 63 Teile des Diessigsäureesters eines Propylenoxid-Ethylenoxid-Blockpolymerisates mit einem mittleren Molgewicht von etwa 8500 sowie einem Ethylenoxidanteil von 80 %, 7 Teile eines Kondensationsproduktes aus Kresol, dem Natriumsalz der 2-Hydroxynaphthalin-6-sulfonsäure, Formaldehyd und Natriumsulfit, 1 Teil o-Phenylphenol-Natrium und 90,7 Teile Wasser werden in einer Perlmühle wie im Beispiel 1 gemahlen. Nach einer Mahlzeit von zwei Stunden bei einer Mahltemperatur von 50°C erhält man eine Dispersion, deren Farbstoffteilchen zu 80 % eine Korngröße von kleiner als 5 µm aufweisen bzw. zu 45 % kleiner als 1 µm sind. Nach dem Abtrennen des Mahlsandes und anschließender Siebung durch ein 90 oder 120 DIN-Sieb erhält man einen gut fließfähigen Teig mit einem Farbstoffgehalt von 30 %. Diese Farbstoffzubereitung ist bei Raumtemperatur und bei 50°C mehrere Monate lang lagerstabil.

<u>Vorschrift 3:</u>

662,4 Teile einer wäßrigen Paste des Farbstoffes C.I. Disperse Blue 79 mit der C.I.-Nr. 11345 sowie der Formel

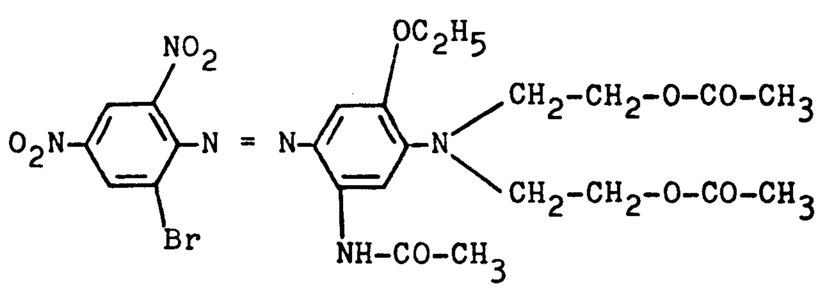

(entsprechend 414 Teilen Reinfarbstoff), 84 Teile Monoethylenglykol, 21 Teile eines mit Essigsäure veresterten

Umsetzungsproduktes von Nonylphenol mit 100 Molen Ethylenoxid, 93 Teile eines hochpolymeren Kraft-Natriumligninsulfonates mittleren Sulfonierungsgrades, 2 Teile o-Phenylphenol-Natrium und 137,6 Teile Wasser werden in einer Perlmühle mit Siliquarzitperlen gemahlen. Nach 150 Minuten Mahlzeit weisen 80 % der Farbstoffteilchen in der so erzeugten Dispersion eine Korngröße von kleiner als 3 µm auf. Nach dem Abtrennen der Perlen und anschließender Siebung durch ein 90 DIN-Sieb erhält man eine gut fließfähige 41,4 %ige Farbstoffzubereitung, die bei Raumtemperatur und bei 50°C mehrere Monate lang lagerstabil ist.

## Färbebeispiele

### Beispiel 1

15 g einer flüssigen Farbstoffpräparation, hergestellt gemäß Vorschrift 1, werden in 1 l Wasser bei ca. 40°C dispergiert. Mit dieser Flotte wird ein Polyester-Taft auf einem Foulard bei einer Flottenaufnahme von ca. 45 % geklotzt, anschliessend bei 100°C getrocknet und dann zur Farbstoff-Fixierung ca. 1 Minute bei ca. 220°C thermosoliert.

Fernerhin wird eine weitere Klotzflotte enthaltend gleiche Mengen (bezogen auf 100 %igen Farbstoff) desselben gelben Dispersionsfarbstoffes, jedoch in dem seiner bisherigen Handelsform zugrundeliegenden anionischen Finish, angesetzt und damit ein zweites PES-Gewebe (wie oben beschrieben) unter den zuvor genannten Applikations- sowie Fixierbedingungen behandelt.

Auf beide wie angegeben separat gefärbte Gewebe wird sodann bei Unterlassung irgendwelcher zwischenzeitlichen, nassen Nachbehandlungsoperation jeweils ein Tropfen Wasser aufgebracht und die Ware danach getrocknet.

Während nun im Falle der ersten Färbung mit der erfindungsgemäß angewandten Farbstoffpräparation an der vorherigen

Auftragsstelle des Wassertropfens keine erkennbare Markierung des Warenbildes verursacht wird, zeigt die zweite Färbung indessen dort einen deutlichen hellen Kreis mit braunem Rand entsprechend den Ausmaßen der ehedem vorhandenen nassen Stelle.

Wird jedoch die zweite Färbung unter Einsatz des bis jetzt handelsüblichen, anionisch gefinishten Farbstoffes mit einem wäßrigen Bad unter Zusatz von

5 $cm^3/l$ Natronlauge (32,5 %ig) und

2 g/l Hydrosulfit (Dithionit)

15 Minuten lang bei 85°C nachbehandelt und abschließend mit Wasser gespült sowie getrocknet, dann bringt ein auf die gefärbte Warenoberfläche auftreffender Wassertropfen die zuvor beschriebene Erscheinung nicht mehr hervor.

Daraus ergibt sich, daß die (erste) Färbung mit dem Farbstoff, dispergiert und eingestellt mit dem Finish nach dem beanspruchten Verfahren, keiner nassen Nachbehandlung bedarf, wohl aber die (zweite) Färbung mit der herkömmlichen, ausschließlich anionischen Farbstoffpräparation.

Beispiel 2

10 kg einer flüssigen Farbstoffpräparation, hergestellt gemäß Vorschrift 3, werden in 132 l Wasser bei ca. 40°C dispergiert. Die obige Dispersion wird nunmehr bezüglich ihres Flottengehalts in einer automatischen Dispergier- und Mischvorrichtung durch Zugabe von kaltem Methanol auf eine Zusammensetzung im Verhältnis von 34 Vol.-% Methanol zu 66 Vol.-% Wasser gemischt. Die in der erwähnten Weise zubereitete Klotzflotte wird dann, wie im Färbereibetrieb üblich, über eine Leitung in ein Foulardchassis gepumpt und dort über ein Magnetventil entsprechend dem gemessenen Flottenverbrauch fortlaufend ergänzt.

Mit dieser Flotte werden 5000 m Polyester-Futterstoff (Kette aus PES-Filament, Schußfäden aus PES-texturiert) mit einem

Gewicht von ca. 60 g/m² bei einer Flottenaufnahme von ca. 35 % geklotzt und das feuchte Textilgut wird sodann während der Passage durch eine Anlage gemäß deutscher Patentschrift DE-C-22 14 714 mit einer Geschwindigkeit von ca. 40 m/min getrocknet.

Die in diesem Fall benutzte besondere Trocknungstechnik nach dem sogenannten "Remaflam"-Prinzip besteht darin, daß die Methanol-haltige Klotzflotte auf der Ware zunächst durch Infrarotstrahlen über ihren Flammpunkt erwärmt wird. Die dabei entstehenden Methanoldämpfe werden dann entzündet. Durch die Verbrennung des Alkoholanteils und durch die gleichzeitig eintretende Verdampfung des Wasseranteils mittels der bei der Verbrennung freiwerdenden Energie wird somit die Ware getrocknet.

Anschließend wird die so behandelte Ware durch eine Thermokontakt-Anlage gemäß deutscher Offenlegungsschrift DE-A1-33 30 055 geführt und dort unter Ausnutzung der Verbrennungsabgase aus dem obigen Trocknungsprozeß, entsprechend der Produktionsgeschwindigkeit von ca. 40 m/min, zur Farbstoff-Fixierung ca. 25 Sekunden bei ca. 220°C thermosoliert.

Wie später an Hand der ohne zusätzliche Maßnahmen fertiggestellten PES-Färbung festgestellt werden kann, hinterlassen auf die Ware aufgebrachte Wassertropfen keinerlei Markierungen, so daß auf eine wäßrige Nachbehandlung des erfindungsgemäß gefärbten Futterstoffes verzichtet werden kann.

<u>Beispiel 3</u>

Zur Bereitung einer Färbeflotte werden pro Liter Flotte 8 g einer flüssigen Farbstoffpräparation, hergestellt gemäß Vorschrift 2, in 650 ccm Wasser bei ca. 30°C dispergiert und durch Versetzen mit ca. 370 ccm Methanol auf ein Flottenvolumen von 1 Liter aufgefüllt (wobei beim Vermischen eine Volumenkontraktion von etwa 2 % auftritt).

Mit dieser Flotte wird ein Gewebe geklotzt, das in der Kette Polyesterfäden und im Schuß eine Mischung aus 67 % Polyester und 33 % Baumwollfasern enthält; die Flottenaufnahme beim Klotzen beträgt ca. 50 %.

Nach dem Klotzen wird das feuchte Gewebe entsprechend der Arbeitsweise von Beispiel 2 getrocknet, zur Farbstoff-Fixierung anschließend ca. 30 Sekunden bei ca. 210°C mittels Kontakthitze thermosoliert und schließlich ohne jede nasse Nachbehandlung fertiggestellt.

Klotzt man hingegen Gewebe von identischer Zusammensetzung und Machart mit einer die bisher handelsübliche Präparation des blauen Farbstoffes gleicher Konstitution, d.h. den herkömmlichen, ausschließlich anionischen Finish aufweisenden Dispersionsfarbstoff, in derselben Konzentration enthaltenden Flotte und stellt man die solchermaßen gefärbte Ware im Anschluß an den Thermosol-Vorgang ebenfalls ohne nasse Nachbehandlung fertig, so zeigt eine nachfolgend durchgeführte, vergleichende Untersuchung beider Gewebe zur Beurteilung des jeweiligen Färbeergebnisses, daß der Baumwollanteil dieser zweiten Färbung deutlich stärker vom Dispersionsfarbstoff angeschmutzt ist, als derjenige der ersten, d.h. erfindungsgemäßen Färbung.

Außerdem weist die zweite Färbung auch die für den Einsatz anionisch gefinishter Farbstoffe typische Wassertropfenempfindlichkeit auf.

Patentansprüche:

1. Verfahren zum kontinuierlichen Färben von Textilmaterial aus Polyester(PES)-Fasern oder der PES-Faserkomponente von entsprechenden Mischungen mit Cellulosefasern nach der Klotz-Thermosol-Technik mit wasserhaltigen Präparationen von feinverteilten Dispersionsfarbstoffen, dadurch gekennzeichnet, daß man zum Klotzen des Textilgutes an dem jeweiligen Farbmittel oder Mischungen davon hochkonzentrierte Flüssigeinstellungen aus nur organische Stellmittel enthaltenden, ausschließlich oder überwiegend mit nichtionischen Dispergiermitteln gefinishten Dispersionsfarbstoffen einsetzt, und daß die im Anschluß an die Thermosolierung der unter solchen Bedingungen erzeugten Klotzung zur Farbstoff-Fixierung sonst übliche Nachbehandlung der bereits einen Trocknungsvorgang durchgelaufenen Färbung wiederum in nassem Zustand zur Unterdrückung der die Handhabung bzw. Lagerung der fertiggestellten Ware beeinträchtigenden Feuchteempfindlichkeit unterbleibt.

2. Verfahren nach Anspruch 1, dadurch gekennzeichnet, daß die verwendeten nichtionischen Flüssigeinstellungen von Dispersionsfarbstoffen gegebenenfalls in Kombination mit geringen Mengen anionischer Dispergiermittel gefinisht sind.